# EUROPEAN PATENT APPLICATION

(11) **EP 4 769 806 A1**
(43) Date of publication of application: **01.07.2026**
(21) Application number: 25845155.8
(22) Date of filing: 26.06.2025
(51) Int. Cl.: H01M 50/519, H01M 50/258, H01M 50/514, H01M 10/42

(54) **BATTERY ASSEMBLY**

(30) Priority: 22.07.2024 KR 20240096092
(71) Applicant: LG Energy Solution, Ltd., Seoul 07335 (KR)
(72) Inventor: WOO, Ga Young, Daejeon 34122 (KR)
(74) Representative: Plasseraud IP
(86) International application number: PCT/KR2025/008968
(87) International publication number: WO 2026/023891

(57) **Abstract**

An embodiment of the present invention provides a battery assembly including a plurality of battery cells, a battery housing configured to accommodate the battery cells therein, an insulating plate configured to include a plurality of through holes respectively corresponding to the battery cells, and stacked at an upper portion of the battery cells, a metal plate placed at an upper portion of the insulating plate, and configured to electrically connect the battery cells, and a battery management unit electrically connected to the metal plate, and configured to control charging and discharging of the battery cells.

## Description

### [Technical Field]

### Cross-reference to related application(s)

This application claims priority to and the benefit of Korean Patent Application No. 10-2024-0096092 filed in the Korean Intellectual Property Office on July 22, 2024, the entire contents of which are incorporated herein by reference.

The present disclosure relates to a battery assembly mounted inside a vehicle to supply power.

### [Background Art]

A rechargeable battery refers to a battery capable of being charged and discharged. Low-capacity rechargeable batteries are used in portable electronic devices such as mobile phones, laptop computers and camcorders, and large-capacity batteries are widely used as power sources for driving a motor such as for hybrid or electric vehicles.

A rechargeable battery used in a vehicle, etc., includes a plurality of battery cells and a battery management unit for controlling the battery cells. A battery assembly including a plurality of battery cells and a battery management unit requires a metal plate and a mounting frame for connecting the battery management unit and the battery cells. A battery housing, which houses multiple battery cells, requires an installation space where a metal plate, a mounting frame, etc. may be fastened to connect the battery management unit. Accordingly, an overall size and volume of the battery housing increase, resulting in reduced spatial efficiency within the battery housing.

### [Disclosure]

### [Technical Problem]

The present disclosure attempts to provide a battery assembly capable of connecting a battery management unit to a plurality of battery cells without a separate installation space for fastening the battery management unit inside a battery housing.

### [Technical Solution]

An embodiment of the present invention provides a battery assembly including a plurality of battery cells, a battery housing configured to accommodate the battery cells therein, an insulating plate configured to include a plurality of through holes respectively corresponding to the battery cells, and stacked at an upper portion of the battery cells, a metal plate placed at an upper portion of the insulating plate, and configured to electrically connect the battery cells, and a battery management unit electrically connected to the metal plate, and configured to control charging and discharging of the battery cells.

The battery housing may include a plurality of openings into which the battery cells are each separately inserted, and a fastening guide formed by some of side surfaces of the battery housing protruding, and configured to assist fastening of the insulating plate.

The fastening guide may include a first fastening guide formed by a first side surface of the battery housing protruding and including a plurality of defective portions, and a second fastening guide formed to protrude a first side surface opposite to the first side surface on which the first fastening guide is formed.

The metal plate may be placed on a first surface of the insulating plate, excluding a region where the through holes formed in the insulating plate are positioned.

The metal plate may be connected to the battery cells by wire bonding.

The battery management unit may include a substrate having a control circuit formed thereon for controlling the battery cells, a connector having a connection circuit formed for connecting the control circuit to the metal plate, and a management unit housing in which the substrate and the connector are accommodated.

The connector may be formed of a ductile material that is bendable by an external force.

The connector may include at least one protrusion exposed to an outside of the management unit housing.

The at least one protrusion may include the connection circuit extending from an inside of the protrusion and connected to the metal plate by wire bonding.

Another embodiment of the present disclosure provides a battery assembly including a plurality of battery cells, a battery housing configured to accommodate the battery cells therein, an insulating plate configured to include a plurality of through holes respectively corresponding to the battery cells, and stacked at an upper portion of the battery cells, and battery management unit configured to control charging and discharging of the battery cells, wherein the battery management unit includes a substrate having a control circuit formed thereon for controlling charging and discharging of the battery cells, and a connector including a plurality of protrusions having a length extending in a direction parallel to a first surface of the insulating plate and a connection circuit for electrically connecting the control circuit to the battery cells.

The connector may include a flexible material that is bendable by an external force and may be fastened to an upper portion of the insulating plate by being bent by the external force.

### [Advantageous Effects]

According to an embodiment of the present disclosure, a battery management unit may be connected to a plurality of battery cells without securing a separate space for fastening a battery management unit inside a battery housing.

The advantages achievable by the present disclosure are not limited to those described above, and other effects not explicitly mentioned herein will be clearly understood by those skilled in the art from the following description.

### [Description of the Drawings]

FIG. 1 and FIG. 2 illustrate exploded perspective views of a battery assembly according to a first embodiment of the present disclosure.
FIGS. 3 and 4 illustrate exploded perspective views of a battery housing according to the first embodiment of the present disclosure.
FIG. 5 and FIG. 6 illustrate perspective views of an insulating plate and a metal plate according to the first embodiment of the present disclosure.
FIG. 7 illustrates a perspective view of a battery management unit according to the first embodiment of the present disclosure.
FIG. 8 illustrates an exploded perspective view of the battery management unit shown in FIG. 7.
FIG. 9 illustrates a side view of the battery management unit of FIG. 7.
FIG. 10 illustrates an exploded perspective view of a battery assembly according to a second embodiment of the present disclosure.

### [Mode for Invention]

In describing embodiments of the present specification, when it is determined that a detailed description of the well-known art associated with the present disclosure may obscure the gist of the present invention, it will be omitted. The accompanying drawings are provided only in order to allow embodiments disclosed in the present specification to be easily understood and are not to be interpreted as limiting the spirit disclosed in the present specification, and it is to be understood that the present invention includes all modifications, equivalents, and substitutions without departing from the scope and spirit of the present invention.

Terms including ordinal numbers such as first, second, and the like will be used only to describe various components, and are not to be interpreted as limiting these components. The terms are only used to differentiate one component from other components.

It is to be understood that when one component is referred to as being "connected" or "coupled" to another component, it may be connected or coupled directly to the other component or may be connected or coupled to the other component with a further component intervening therebetween. On the other hand, it is to be understood that when one component is referred to as being "connected" or "coupled directly" to another component, it may be connected to or coupled to the other component without being connected to a component intervening therebetween.

It will be further understood that terms "comprises/includes" or "have" used in this application specify the presence of stated features, numerals, steps, operations, components, parts, or a combination thereof, but do not preclude the presence or addition of one or more other features, numerals, steps, operations, components, parts, or a combination thereof.

Hereinafter, the present disclosure will be described in detail.

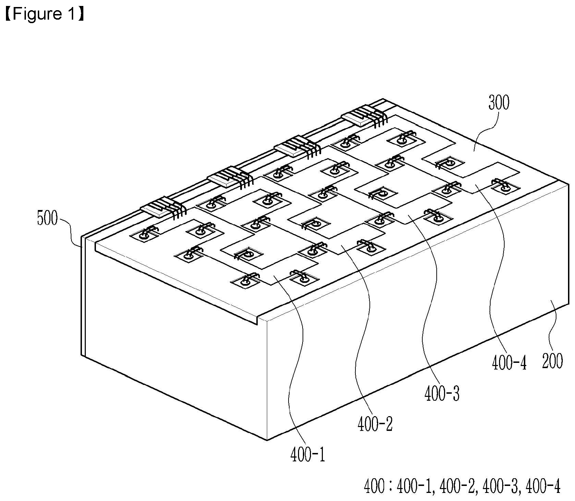

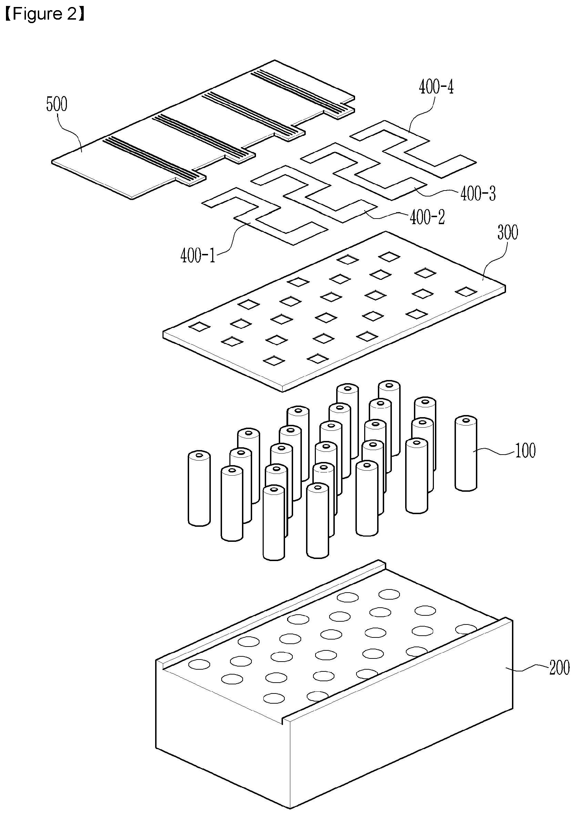

FIG. 1 and FIG. 2 illustrate exploded perspective views of a battery assembly according to a first embodiment of the present disclosure.

Referring to FIGS. 1 and 2, a battery assembly according to the first embodiment of the present disclosure may include a plurality of battery cells 100, a battery housing 200, an insulating plate 300, a plurality of metal plates 400 (400-1, 400-2, 400-3, and 400-4), and a battery management unit 500. Although FIGS. 1 and 2 illustrate a battery assembly including 24 battery cells 100 and 4 metal plates 400, the present disclosure is not limited thereto. The battery assembly may include one or more battery cells 100 and one or more metal plates 400.

Referring to FIG. 2, a battery assembly according to the first embodiment of the present disclosure may be implemented in a form in which a plurality of battery cells 100, an insulating plate 300, and a plurality of metal plates 400 are housed inside a battery housing 200, and a battery management unit 500 is installed on a first surface of the battery housing 200. In this case, the components housed inside the battery housing 200 may be stacked in an order of the battery cells 100, an insulating plate 300, and the metal plates 400. Additionally, the battery cells 100 may be electrically connected to the metal plates 400, and the metal plates 400 may be electrically connected to the battery management unit 500.

The battery cells 100 may refer to a smallest unit of a rechargeable battery formed of an outer material, an electrolyte, a positive electrode material, a negative electrode material, etc., and may supply power to a device that uses electricity as energy, such as a vehicle. The battery cells 100 may be connected in series and/or in parallel with each other. FIG. 2 illustrates a plurality of battery cells 100 having a cylindrical shape, but the shape of the battery cells 100 is not limited thereto, and may be freely changed as needed.

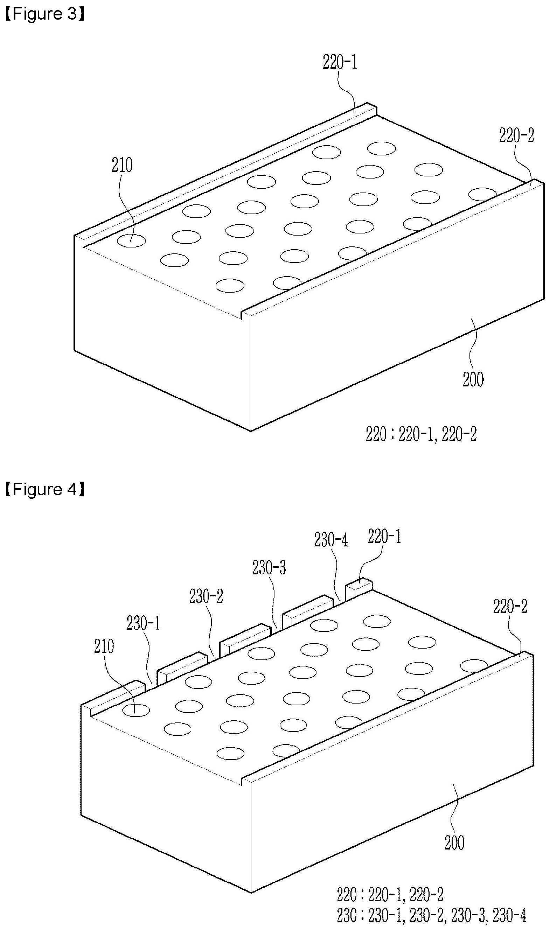

FIGS. 3 and 4 illustrate exploded perspective views of a battery housing 200 according to the first embodiment of the present disclosure.

The battery housing 200 may be configured to accommodate the battery cells 100, an insulating plate 300, and the metal plates 400, and may include an internal space for accommodating the battery cells 100, the insulating plate 300, and the metal plates 400. According to an embodiment, the battery housing 200 may be formed of an insulator. For example, the battery housing 200 may be implemented as a rectangular case with a hollow space inside. However, the shape and size of the battery housing 200 are not limited thereto, and may be freely changed as needed.

Referring to FIG. 3, the battery housing 200 may include a plurality of openings 210 and fastening guides 220 (220-1 and 220-2). Although FIG. 3 illustrates the battery housing 200 including 24 openings 210 and two fastening guides 212-1 and 212-2, the present disclosure is not limited thereto. The battery housing 200 may include one or more openings 210 and one or more fastening guides 220.

The battery cells 100 may be separately inserted into the openings 210. According to an embodiment, the openings 210 may be implemented in a cylindrical shape. However, the shape and size of the openings 210 may be determined according to the shape of the battery cells 100.

The fastening guide 220 may assist in fastening the insulating plate 300. For example, the fastening guide 220 may assist in fixing the insulating plate 300 fastened to an upper portion of the battery housing 200. According to an embodiment, the fastening guide 220 may be implemented in a shape in which some of the side surfaces of the battery housing 200 protrude. However, the shape and size of the fastening guide 220 are not limited thereto, and may be freely changed as needed.

According to an embodiment, the fastening guide 220 may include a first fastening guide 212-1 formed by protruding a first side surface of the battery housing 200 and including a plurality of defective portions 213 (213-1, 213-2, 213-3, and 213-4), as illustrated in FIG. 4, and a second fastening guide 212-2 formed by protruding a first side surface opposite to the first side surface of the battery housing 200 on which the first fastening guide 212-1 is formed. A plurality of protrusions 541 of a connector 540 of a battery management unit 500 described later may be connected to the defective portions 213.

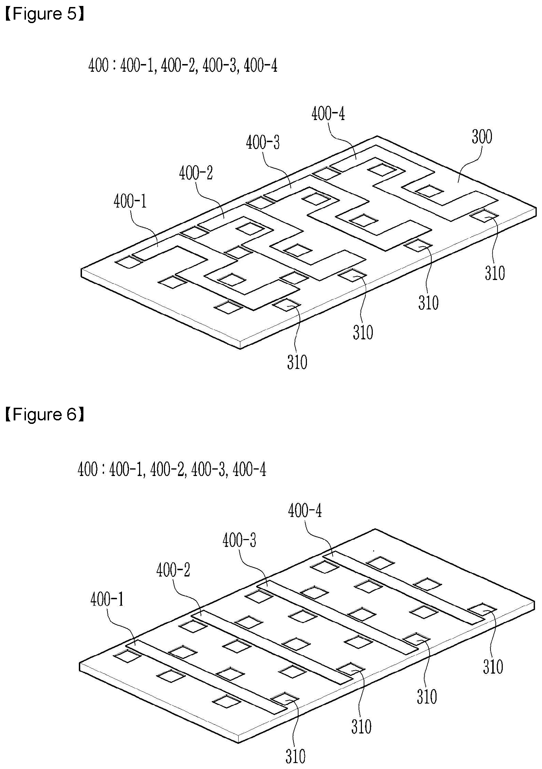

FIG. 5 and FIG. 6 illustrate perspective views of the insulating plate and the metal plate 400 according to a first embodiment of the present disclosure.

The insulating plate 300 may be configured to prevent direct contact between the battery cells 100, and may be made of an insulator. The insulating plate 300 may include a plurality of through holes 310. The insulating plate 300 may be attached to an upper portion of the battery housing 200 in which the battery cells 100 are accommodated. The through holes 310 may correspond one-to-one with the battery cells 100 in a state where the insulating plate 300 is fastened to an upper portion of the battery cells 100. By means of the insulating plate 300 in which the through holes 310 are formed, an outer material of the battery cells 100 may not be exposed outside the insulating plate 300, and positive or negative electrodes of the battery cells 100 may be exposed to an outside of the insulating plate 300.

FIG. 5 and FIG. 6 illustrate that the insulating plate 300 is a thin plate having a rectangular shape. However, the shape and size of the insulating plate 300 are not limited thereto, and may be freely changed as needed. For example, the insulating plate 300 may be implemented in various shapes such as a circular plate, a triangular plate, a square plate, etc.

The metal plate 400 may be configured to electrically connect the battery cells 100, and may be made of a conductor. The metal plate 400 may be implemented as a metal plate of various shapes. The metal plate 400 may be placed at an upper portion of the insulating plate 300. In this case, the metal plate 400 may be placed so as not to cover the through holes 310 formed in the insulating plate 300. For example, the metal plate 400 may be placed on a region of a first surface of the insulating plate 300 excluding a region where the through holes 310 formed in the insulating plate 300 are positioned.

The metal plate 400 may be electrically connected to electrodes (positive electrode and negative electrode) of the battery cells 100. In this case, the electrodes of the battery cells 100 are exposed to the outside of the insulating plate 300 through the through holes 310 formed in the insulating plate 300. According to an embodiment, the metal plate 400 may be electrically connected to the battery cells 100 through a wire bonding method. The wire bonding method refers to a method of electrically connecting chips, electrodes, plates, etc. using metal wires (fine wires) such as gold, copper, and aluminum.

According to an embodiment, the metal plate 400 may be implemented in multiple pieces. In this case, the battery cells 100 electrically connected to one metal plate 400 may form one battery module. For example, as shown in FIG. 1, six battery cells 100 may be electrically connected to one metal plate 400 to form one battery module.

Referring to FIGS. 5 and 6, a plurality of metal plates 400-1 to 400-4 may be placed at an upper portion of the insulating plate 300. Each of the metal plates 400-1 to 400-4 may be arranged so as not to cover the through holes 310 formed in the insulating plate 300. For example, as shown in FIG. 5, the metal plates 400-1 to 400-4 may be formed in an angled '2'-shaped configuration and arranged to pass along side surfaces of the six through holes 310 that are formed in a zigzag pattern in the insulating plate 300. In another example, as shown in FIG. 6, the metal plates 400-1 to 400-4 may be implemented in a 1' shaped configuration and arranged at a center of the six through holes 310 formed in a zigzag pattern in the insulating plate 300. However, the shape and size of the metal plate 400 are not limited thereto, and may be freely changed as needed.

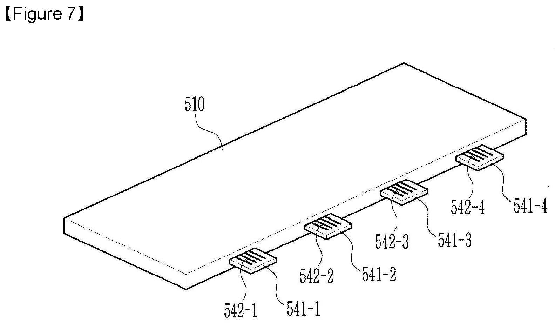

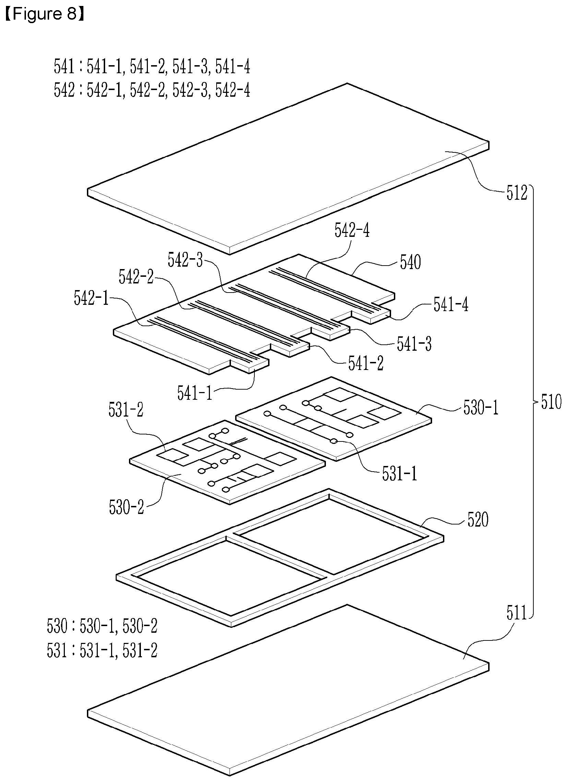

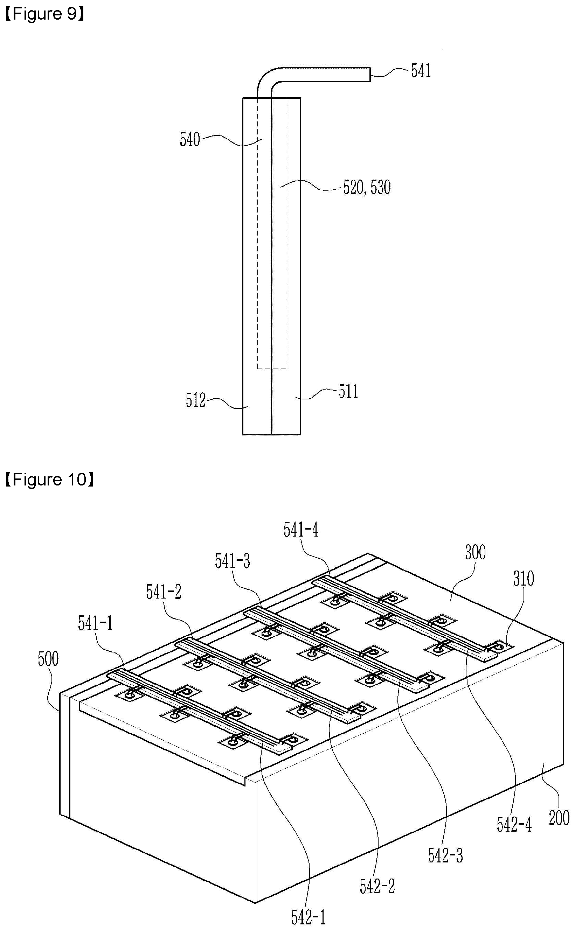

FIG. 7 illustrates a perspective view of a battery management unit 500 according to the first embodiment of the present disclosure, FIG. 8 illustrates an exploded perspective view of the battery management unit 500 shown in FIG. 7, and FIG. 9 illustrates a side view of the battery management unit 500 of FIG. 7.

The battery management unit 500 may be configured to control charging and discharging of the battery cells 100. The battery management unit 500 may be electrically connected to the battery cells 100 through the metal plate 400 to measure a temperature, resistance, voltage, etc. of the battery cells 100, and may diagnose and analyze a state of the battery cells 100. The battery management unit 500 may control charging or discharging, cell balancing, etc. of the battery cells 100 based on an analysis result of the state of the battery cells 100.

Referring to FIGS. 7 and 8, the battery management unit 500 may include a management unit housing 510, a mounting frame 520, a substrate 530 (530-1 and 530-2), and a connector 540. Although FIGS. 7 and 8 illustrate that the battery management unit 500 includes two substrates 530-1 and 530-2, the present disclosure is not limited thereto. The battery management unit 500 may include one or more substrates 530.

The management unit housing 510 may be configured to accommodate the mounting frame 520, the substrate 530, and the connector 540, and may be made of an insulator. The management unit housing 510 may accommodate the mounting frame 520, the substrate 530, and the connector 540 that are sequentially stacked inside. According to an embodiment, the management unit housing 510 may include a first management unit housing 511 and a second management unit housing 512. For example, as illustrated in FIG. 8, the mounting frame 520, the substrate 530, and the connector 540 may be accommodated between the first management unit housing 511 and the second management unit housing 512. In FIG. 8, the management unit housing 510 is illustrated as a rectangular plate shape, but the shape or size of the management unit housing 510 is not limited thereto, and may be freely changed as needed.

The mounting frame 520 may be configured to fix the substrate 530, and may be made of an insulator. The mounting frame 520 may have a structure in which the substrate 530 is able to be fastened inside. In FIG. 8, the mounting frame 520 is illustrated as a rectangular frame with two square holes formed inside, but the shape or size of the mounting frame 520 is not limited thereto, and may be determined according to a number or shape of the substrate 530.

The control circuit 531 (531-1 and 531-2) for controlling the battery cells 100 may be formed on the substrate 530. The substrate 530 may be formed of an insulating plate. In FIG. 8, the substrate 530 is illustrated as a square plate shape, but the shape or size of the substrate 530 is not limited thereto, and may be freely changed as needed.

The connector 540 may be configured to electrically connect the control circuit 531 formed on the substrate 530 and the metal plate 400, and may be implemented as an insulator. A connection circuit 542 (542-1, 542-2, 542-3, and 542-4) may be formed in the connector 540. Herein, the connection circuit 542 indicates an electrical circuit that electrically connects the control circuit 531 formed on the substrate 530 and the metal plate 400. A first end of the connection circuit 542 may be connected to a specific point within the control circuit 531, and a second end of the connection circuit 542 may be connected to the metal plate 400.

The connector 540 may include a plurality of protrusions 541 (541-1, 541-2, 541-3, and 541-4). Although FIGS. 7 and 8 illustrate that the connector 540 includes the four protrusions 541-1, 541-2, 541-3, the 541-4, the present disclosure is not limited thereto. The connector 540 may include one or more protrusions 541.

The protrusions 541 may be exposed to an exterior of the management unit housing 510. The protrusions 541 may include a second end of the connection circuit 542 connected to the metal plate 400. The protrusions 541 may be formed of a ductile material that is bendable by an external force. The protrusions 541 may be fastened to the battery housing 200 or the defective portion 213 by being bent by an external force. In a state where the protrusions 541 are fastened to the battery housing 200 or the defective portion 213, a second end of the connection circuit 542 included in the protrusions 541 may be electrically connected to the metal plate 400 through wire bonding.

FIG. 10 illustrates an exploded perspective view of a battery assembly according to a second embodiment of the present disclosure.

Regarding the battery assembly according to the second embodiment of the present disclosure, descriptions of common parts with the battery assembly according to the first embodiment described above will be omitted, and only differences will be described.

Referring to FIG. 10, the battery assembly according to the second embodiment of the present disclosure may include a plurality of battery cells 100, a battery housing 200, an insulating plate 300, and a battery management unit 500.

The connector 540 of the battery management unit 500 according to the second embodiment of the present disclosure may include a plurality of protrusions 541. The protrusions 541 may be formed of a ductile material that is bendable by an external force. The protrusions 541 may be fastened to the battery housing 200 and the insulating plate 300 by being bent by an external force. The protrusions 541 may have a length extending in a direction parallel to a first surface of the insulating plate 300. In this case, the length of the protrusions 541 may be determined as a length that does not protrude outside the battery housing 200 while the protrusion 541 is fastened to an upper portion of the insulating plate 300. The protrusions 541 may be electrically connected to the battery cells 100. According to an embodiment, the protrusions 541 may be connected to the battery cells 100 in a wire bonding manner.

That is, the battery assembly according to the second embodiment of the present disclosure is different from that of the first embodiment in that the configuration of the metal plate 400 is omitted compared to the battery assembly according to the first embodiment described above, as the protrusions 541 of the connector 540 of the battery management unit 500 is formed to extend along a first surface of the insulating plate 300, thereby directly connecting the battery cells 100 and the protrusions 541.

The scope of the present disclosure is determined not by the above description, but by the following claims, and all changes or modifications within the spirit, scope, and equivalents of claims should be construed as being included in the scope of the present disclosure.

## Claims

1. A battery assembly comprising:
a plurality of battery cells;
a battery housing configured to accommodate the battery cells therein;
an insulating plate configured to include a plurality of through holes respectively corresponding to the battery cells, and stacked at an upper portion of the battery cells;
a metal plate placed at an upper portion of the insulating plate, and configured to electrically connect the battery cells; and
a battery management unit electrically connected to the metal plate, and configured to control charging and discharging of the battery cells.

2. The battery assembly of claim 1, wherein
the battery housing
includes: a plurality of openings into which the battery cells are each separately inserted; and
a fastening guide formed by some of side surfaces of the battery housing protruding, and configured to assist fastening of the insulating plate.

3. The battery assembly of claim 2, wherein
the fastening guide
includes: a first fastening guide formed by protruding a first side surface of the battery housing and including a plurality of defective portions; and
a second fastening guide formed by protruding a second side surface opposite to the first side surface on which the first fastening guide is formed.

4. The battery assembly of claim 1, wherein
the metal plate
is placed on a first surface of the insulating plate, excluding a region where the through holes formed in the insulating plate are positioned.

5. The battery assembly of claim 1, wherein
the metal plate
is connected to the battery cells by wire bonding.

6. The battery assembly of claim 1, wherein
the battery management unit
includes: a substrate having a control circuit formed thereon for controlling the battery cells;
a connector having a connection circuit formed for connecting the control circuit to the metal plate; and
a management unit housing in which the substrate and the connector are accommodated.

7. The battery assembly of claim 6, wherein
the connector
is made of a flexible material that is bendable by an external force.

8. The battery assembly of claim 6, wherein
the connector
includes at least one protrusion exposed to an outside of the management unit housing.

9. The battery assembly of claim 8, wherein
the at least one protrusion
includes the connection circuit extending from an inside of the protrusion and connected to the metal plate by wire bonding.

10. A battery assembly comprising:
a plurality of battery cells;
a battery housing in which the battery cells are accommodated;
an insulating plate configured to include a plurality of through holes respectively corresponding to the battery cells, and stacked at an upper portion of the battery cells; and
a battery management unit configured to control charging and discharging of the battery cells,
wherein the battery management unit
includes: a substrate having a control circuit formed thereon for controlling charging and discharging of the battery cells; and
a connector including a plurality of protrusions having a length extending in a direction parallel to a first surface of the insulating plate and a connection circuit for electrically connecting the control circuit to the battery cells.

11. The battery assembly of claim 10, wherein
the connector
includes a flexible material that is bendable by an external force and is fastened to an upper portion of the insulating plate by being bent by the external force.
